# EUROPEAN PATENT APPLICATION

(11) **EP 4 737 395 A1**
(43) Date of publication of application: **06.05.2026**
(21) Application number: 24832438.6
(22) Date of filing: 26.06.2024
(51) Int. Cl.: C01G 53/00, H01M 4/525, H01M 4/505, H01M 4/36, H01M 4/131, H01M 10/052, H01M 4/02

(54) **METHOD FOR PREPARING POSITIVE ELECTRODE ACTIVE MATERIAL FOR LITHIUM SECONDARY BATTERY, AND LITHIUM SECONDARY BATTERY COMPRISING POSITIVE ELECTRODE ACTIVE MATERIAL PREPARED USING SAME**

(30) Priority: 27.06.2023 KR 20230082786
(71) Applicant: Posco Future M Co., Ltd., Pohang-si, Gyeongsangbuk-do 37918 (KR)
(72) Inventor: LEE, Subin, Pohang-si, Gyeongsangbuk-do 37918 (KR); MYUNG, Minhoon, Pohang-si, Gyeongsangbuk-do 37918 (KR); SIM, Sung Keun, Pohang-si, Gyeongsangbuk-do 37918 (KR); LEE, Seungwon, Pohang-si, Gyeongsangbuk-do 37918 (KR); CHOI, Kwonyoung, Pohang-si, Gyeongsangbuk-do 37918 (KR)
(74) Representative: Meissner Bolte Partnerschaft mbB
(86) International application number: PCT/KR2024/008911
(87) International publication number: WO 2025/005660

(57) **Abstract**

The present embodiments relate to a method for manufacturing a positive electrode active material for a lithium secondary battery and to a lithium secondary battery comprising the same. In one embodiment, a method for manufacturing a positive electrode active material for a lithium secondary battery comprises: preparing a metal hydroxide comprising nickel, cobalt, and manganese; mixing the metal hydroxide, a lithium raw material, and a dopant raw material to prepare a mixture; preliminarily calcining the mixture to obtain a preliminarily calcined product; subjecting the preliminarily calcined product to a three-step calcination process including a first calcination, a second calcination, and a third calcination to obtain a calcined product in a single-particle form; and mixing the calcined product with a coating raw material and heat-treating the mixture to obtain a metal oxide having a coating layer formed thereon, wherein, in the step of obtaining the calcined product, the second calcination may be performed at a temperature higher than that of the first calcination, and the third calcination may be performed at a temperature lower than that of the first calcination.

## Description

### [Technical Field]

The present embodiments relate to a method for manufacturing a positive electrode active material for a lithium secondary battery, and to a lithium secondary battery comprising a positive electrode active material manufactured by the method.

### [Background Art]

In recent years, driven by the explosive growth in demand for electric vehicles and the increasing requirement for longer driving ranges, development of secondary batteries having high capacity and high energy density has been actively pursued worldwide. In particular, high-nickel NCM positive electrode materials have been employed to meet these demands.

However, as the nickel content increases, particle strength decreases, leading to formation of microcracks during charge and discharge. This in turn increases the specific surface area of the positive electrode material, which promotes side reactions with the electrolyte and thereby increases gas generation. Furthermore, due to structural instability, unstable Ni³⁺ is reduced to stable Ni²⁺ and converted into stable NiO, thereby increasing the degree of cation mixing. Thus, it is difficult to apply such materials directly as positive electrode active materials for lithium-ion batteries used in electric vehicles or energy storage systems.

To address these problems, approaches have been proposed in which a positive electrode material is manufactured in a single-particle form by maximizing the size of primary particles, rather than using secondary particles in which multiple primary particles are agglomerated.

However, manufacturing a positive electrode material in a single-particle form typically requires calcination at higher temperatures compared to secondary particles. Under such conditions, under-calcination frequently occurs, resulting in defects in the layered crystal structure and deterioration in electrochemical properties such as capacity and output.

Furthermore, when the calcination temperature is lowered to mitigate such defects, the crystallite size within the single particle does not sufficiently grow, which leads to deterioration in particle strength and cycle life characteristics.

### [Detailed Description of the Invention]

### [Technical Problem]

The present embodiments aim to provide a method for manufacturing a positive electrode active material for a lithium secondary battery that exhibits excellent electrochemical characteristics while improving cycle life and resistance characteristics, as well as to provide a lithium secondary battery comprising the positive electrode active material.

### [Technical Solution]

A method for manufacturing a positive electrode active material for a lithium secondary battery according to one embodiment comprises: preparing a metal hydroxide comprising nickel, cobalt, and manganese; mixing the metal hydroxide, a lithium raw material, and a dopant raw material to prepare a mixture; preliminarily calcining the mixture to obtain a preliminarily calcined product; subjecting the preliminarily calcined product to a three-step calcination process including a first calcination, a second calcination, and a third calcination to obtain a calcined product in a single-particle form; and mixing the calcined product with a coating raw material and heat-treating the mixture to obtain a metal oxide having a coating layer formed thereon.

In the step of obtaining the calcined product, the second calcination may be performed at a temperature higher than that of the first calcination, and the third calcination may be performed at a temperature lower than that of the first calcination.

In another embodiment, a lithium secondary battery may include a positive electrode comprising the positive electrode active material manufactured according to the embodiment described above.

### [Effects of the Invention]

According to the present embodiment, by performing the first, second, and third calcinations in a three-step (STEP) process-wherein the second calcination is carried out at a temperature higher than the first calcination, and the third calcination is carried out at a temperature lower than the first calcination-the crystal structure can be stabilized and the particle strength can be enhanced.

Accordingly, the present embodiment makes it possible to realize a positive electrode active material in a single-particle form that nevertheless exhibits excellent electrochemical properties, as well as improved cycle life and resistance characteristics.

### [Best Mode for Carrying Out the Invention]

The terms "first," "second," "third," and the like are used to describe various parts, components, regions, layers, and/or sections, but are not limited thereto. These terms are merely used to distinguish one part, component, region, layer, or section from another. Thus, a first part, component, region, layer, or section described below may be referred to as a second part, component, region, layer, or section without departing from the scope of the present invention.

Technical terms used herein are provided merely to describe specific embodiments and are not intended to limit the present invention. Singular forms used herein include plural forms unless the context clearly indicates otherwise. The term "comprising/including/containing" as used in this specification specifies the presence of stated features, regions, integers, steps, operations, elements, and/or components, but does not preclude the presence or addition of one or more other features, regions, integers, steps, operations, elements, and/or components.

Where a part is described as being "on" or "over/above" another part, it may be directly on or over the other part, or intervening parts may be present therebetween. In contrast, where a part is described as being "directly on" or "directly over/above" another part, no intervening part is present.

Unless otherwise defined, all technical and scientific terms used herein have the same meaning as commonly understood by one of ordinary skill in the art to which the present invention pertains. Terms defined in generally used dictionaries shall be interpreted to have meanings consistent with the relevant technical literature and the present disclosure, and shall not be interpreted in an idealized or overly formal sense unless explicitly stated otherwise.

Unless otherwise specified, "%" refers to weight percent, and 1 ppm refers to 0.0001 wt%.

As used herein, the phrase "combinations thereof," as used in a Markush group, refers to any mixture or combination selected from the listed components, and includes one or more components selected from the group.

Hereinafter, embodiments of the present invention will be described in detail to enable those skilled in the art to practice the invention without undue experimentation. However, the present invention may be embodied in various different forms, and is not limited to the embodiments described herein.

### Method for manufacturing positive electrode active material for lithium secondary battery

As described above, in a single-particle type positive electrode active material, over-sintering may occur, causing defects in the layered crystal structure or a reduction in particle strength, which in turn leads to deterioration in high-temperature cycle life and resistance characteristics.

However, in the present embodiment, such problems have been solved by manufacturing a single-particle type positive electrode active material by performing a three-step (STEP) calcination process including a first calcination, a second calcination, and a third calcination, wherein the second calcination is performed at a temperature higher than that of the first calcination, and the third calcination is performed at a temperature lower than that of the first calcination.

Specifically, a method for manufacturing a positive electrode active material for a lithium secondary battery according to one embodiment may comprise: preparing a metal hydroxide comprising nickel, cobalt, and manganese; mixing the metal hydroxide, a lithium raw material, and a dopant raw material to prepare a mixture; preliminarily calcining the mixture to obtain a preliminarily calcined product; subjecting the preliminarily calcined product to a three-step calcination process including a first calcination, a second calcination, and a third calcination to obtain a calcined product in a single-particle form; and mixing the calcined product with a coating raw material and heat-treating the mixture to obtain a metal oxide having a coating layer formed thereon.

In this case, in the step of obtaining the calcined product, the second calcination may be performed at a temperature higher than that of the first calcination, and the third calcination may be performed at a temperature lower than that of the first calcination. As in the present embodiment, by performing the second calcination step at a high temperature for a short period of time and then performing the third calcination step, it is possible to realize a single-particle type positive electrode active material in which the particle strength is improved and the crystallized structure is stabilized.

In this specification, the term "single particle" may include at least one of: a single-crystal structure composed of a single particle; and a structure in which about 2 to 20 particles, or about 2 to 10 particles, are agglomerated and, when a cross-section of the powder is observed by a scanning electron microscope (SEM), can be distinguished as one agglomerate. Here, one particle means one grain (grain or crystallite).

In the present embodiment, such a single-particle type active material has a smaller specific surface area than a conventional secondary-particle type positive electrode active material in which several tens to several hundreds of primary particles are agglomerated, and thus the amount of gas generation due to side reactions with the electrolyte can be reduced. In addition, since the particle strength is high, particle breakage during rolling can be suppressed, and crack generation upon repeated charging and discharging can be reduced. Accordingly, as compared with a secondary-particle material, the single-particle material has excellent cycle life and safety, and has the advantage of enabling a high energy density per unit volume of the electrode.

First, a step of preparing a metal hydroxide comprising nickel, cobalt, and manganese is performed.

In this case, the nickel-containing metal hydroxide may be manufactured, for example, by adding a chelating-agent-containing solution and a pH-adjusting-agent-containing solution to a transition metal-containing solution comprising a nickel raw material and, optionally, a cobalt raw material and/or a manganese raw material, and causing a coprecipitation reaction.

The nickel raw material is not particularly limited so long as it is used in the art for manufacturing a precursor of a positive electrode active material. For example, the nickel raw material may be a nickel-containing sulfate, acetate, nitrate, halide, sulfide, hydroxide, oxide, or oxyhydroxide, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a nickel fatty acid salt, a nickel halide, or a combination thereof, but is not limited thereto.

The cobalt raw material is not particularly limited so long as it is used in the art for manufacturing a precursor of a positive electrode active material. For example, the cobalt raw material may be a cobalt-containing sulfate, acetate, nitrate, halide, sulfide, hydroxide, oxide, or oxyhydroxide, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited so long as it is used in the art for manufacturing a precursor of a positive electrode active material. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate salt, manganese citrate, a manganese fatty acid salt, manganese oxides such as Mn₂O₃, MnO₂, and Mn₃O₄, an oxyhydroxide, manganese chloride, or a combination thereof, but is not limited thereto.

The transition metal-containing solution may be prepared by adding the nickel raw material and, optionally, the cobalt raw material and/or the manganese raw material to a solvent, specifically water, or a mixture of water and an organic solvent (for example, an alcohol, etc.) that is miscible with water.

The chelating-agent-containing solution serves to form a complex, and may comprise, as a chelating agent, for example, NH₃, NH₄OH, (NH₄)₂SO₄, NH₄NO₃, NH₄Cl, CH₃COONH₄, NH₄CO₃, or a combination thereof, but is not limited thereto. The chelating-agent-containing solution may be used in the form of an aqueous solution, and the solvent may be water, or a mixture of water and an organic solvent (for example, an alcohol, etc.) that is miscible with water.

Next, a step of mixing the metal hydroxide, the lithium raw material, and the dopant raw material to prepare a mixture is performed.

The lithium raw material is not particularly limited so long as it is generally used in the art, and may be, for example, Li₂CO₃, LiOH, or LiOH·H₂O. In the present embodiment, LiOH·H₂O may be used as the lithium raw material.

At this time, the molar ratio (Li/Me) of lithium (Li) to the total metal (Me) excluding lithium may be adjusted such that it is in the range of 1.0 to 1.1, or in the range of 1.01 to 1.08, when preparing the mixture.

The dopant raw material may include an Al raw material, a Y raw material, and a Zr raw material.

The Al raw material may include, for example, at least one selected from Al(OH)₃, Al₂(SO₄)₃, Al(NO₃)₃, Al₂O₃, and AlCl₃, but is not limited thereto.

The Y raw material may include, for example, at least one selected from Y₂O₃, YSO₄, Y₂(SO₄)₃, and Y(NO₃)₃, but is not limited thereto.

The Zr raw material may include, for example, at least one selected from ZrO₂, Zr(SO₄)₂, ZrS₂, and Zr(NO₃)₄, but is not limited thereto.

The Al raw material may be added and mixed, for example, in an amount of 200 to 1,800 ppm, or 500 to 1,500 ppm, based on 100 g of the metal hydroxide.

The Y raw material may be added and mixed, for example, in an amount of 400 to 2,000 ppm, or 700 to 1,700 ppm, based on 100 g of the metal hydroxide.

The Zr raw material may be added and mixed, for example, in an amount of 1,200 to 2,800 ppm, or 1,500 to 2,500 ppm, based on 100 g of the metal hydroxide.

When the addition amounts of the Al raw material, the Y raw material, and the Zr raw material satisfy the above ranges, a positive electrode active material having improved capacity retention and resistance characteristics can be manufactured.

Next, a step of preliminarily calcining the mixture to obtain a preliminarily calcined product is performed.

The preliminary calcination may be performed at a temperature in the range of 650°C to 770°C for 2 to 12 hours, or at a temperature in the range of 680°C to 740°C for 3 to 10 hours. By performing the preliminary calcination process in this manner, the production volume of the positive electrode active material can be increased while maintaining electrochemical properties, thereby improving economic efficiency.

Thereafter, a step of subjecting the preliminarily calcined product to a three-step (STEP) calcination process including a first calcination, a second calcination, and a third calcination to obtain a calcined product in a single-particle form is performed.

The first calcination may be performed at a temperature in the range of 870°C to 930°C for 2 to 6 hours, or in the range of 880°C to 920°C for 3 to 5 hours.

The second calcination may be performed at a temperature in the range of 890°C to 960°C for 0.5 to 2 hours, or in the range of 900°C to 940°C for 0.5 to 1.5 hours.

The third calcination may be performed at a temperature in the range of 750°C to 870°C for 5 to 14 hours, or in the range of 780°C to 840°C for 7 to 12 hours.

Specifically, in the present embodiment, the second calcination may be performed at a temperature higher than that of the first calcination, and the third calcination may be performed at a temperature lower than that of the first calcination. By performing the calcination process in three steps including a second calcination step, which is a shooting section performed at a high temperature for a short period of time, it is possible to realize a single-particle type positive electrode active material in which the particle strength is improved and the crystallized structure is stabilized.

Next, a step of mixing the calcined product with a coating raw material and heat-treating the mixture to obtain a metal oxide having a coating layer formed thereon is performed.

The coating raw material may include a Co coating raw material and an Al coating raw material.

The Co coating raw material may include, for example, at least one selected from Co(OH)₂, CoO, Co₃O₄, CoCO₃, cobalt acetate, and cobalt oxalate, but is not limited thereto.

The Al coating raw material may include at least one selected from Al(OH)₃, Al₂(SO₄)₃, Al(NO₃)₃, Al₂O₃, and AlCl₃, but is not limited thereto.

Here, the Co coating raw material may be added and mixed in an amount of 1.5 mol% to 3 mol%, or 2.0 mol% to 2.8 mol%, based on the total weight of the calcined product.

The Al coating raw material may be added and mixed in an amount of 500 ppm to 1,500 ppm, or 800 ppm to 1,200 ppm, based on the total weight of the calcined product.

When the amounts of the Co coating raw material and the Al coating raw material satisfy the above ranges, it is possible to suppress interfacial side reactions between the positive electrode active material and the electrolyte, and to manufacture a lithium secondary battery having improved capacity and resistance characteristics.

In the step of obtaining the metal oxide having the coating layer formed thereon, the heat treatment may be performed, for example, at 660°C to 760°C for 3 to 8 hours, or at 690°C to 750°C for 4 to 6 hours. When the heat treatment process satisfies the above conditions, the amount of lithium remaining on the surface can be reduced and, at the same time, the surface structure can be stabilized.

In the present embodiment, as necessary, a step of pulverizing (crushing) the calcined product may further be performed after the step of obtaining the calcined product. That is, a pulverizing step may be included after the calcined product is obtained and before the coating process.

The pulverizing step may be performed after cooling the calcined product to 50°C to 200°C. When cooling is performed to this temperature range, a reaction between external moisture and the calcined product can be suppressed, and an increase in residual lithium can be suppressed. The pulverizing may be carried out by a method generally employed in the art.

For example, the pulverizing may be carried out using equipment such as a rotor mill, a ball mill, a pin mill, a jet mill, a bead mill, or a roll mill, but is not limited thereto.

The single-particle type metal oxide having the coating layer formed thereon and manufactured by the above-described method may be represented by the following Chemical Formula 1.

[Chemical Formula 1] Liₐ[NiₓCo_{γ}Mn_{z}M_{1w₁}M_{2w₂}]O₂

In Chemical Formula 1, 0.8 ≤ a ≤ 1.2, 0.8 ≤ x ≤ 0.99, 0 < y ≤ 0.06, 0 < z ≤ 0.14, 0 < w₁ ≤ 0.1, and 0 ≤ w₂ ≤ 0.05, x + y + z + w₁ + w₂ = 1, M₁ is Al, Y, and Zr, and M₂ is at least one selected from B, Al, Mg, Ti, Nb, W, Sc, Si, V, Fe, Y, Mo, Ce, Hf, Ta, La, and Sr.

In Chemical Formula 1, the content of nickel, based on 1 mole of the total transition metals contained in the nickel-containing metal oxide having the coating layer formed thereon, may be 0.8 mol or more, and more specifically 0.8 mol to 0.99 mol, 0.82 mol to 0.95 mol, or 0.82 mol to 0.93 mol. When the nickel content is within the above range, a high-capacity battery can be realized.

Further, in Chemical Formula 1, the total content of the dopant elements M₁ and M₂, based on 1 mole of the total of nickel, cobalt, manganese, and the dopant elements, may be greater than 0 and 0.2 mol or less, and more specifically 0.0005 mol to 0.1 mol, 0.0005 mol to 0.08 mol, 0.0005 mol to 0.04 mol, or 0.001 mol to 0.03 mol. In Chemical Formula 1, the content of the dopant elements refers to the amount of the dopant elements finally doped in the positive electrode active material obtained.

Meanwhile, the average particle diameter (D50) of the positive electrode active material according to the present embodiment may be 3 µm or more, and more specifically 3 µm to 6 µm. When the average particle diameter of the single-particle type positive electrode active material satisfies the above range, it is possible to realize a lithium secondary battery having excellent electrochemical properties such as cycle life characteristics and resistance increase rate. In addition, since the energy density per unit volume can be increased, very advantageous effects can be obtained.

The positive electrode active material of the present embodiment exhibits a very low fine powder generation rate. Specifically, when five pressurizations are performed using a roll press at a press gauge of 0.01 mm, the total value of fines having a size of less than 1 µm may be 2% or less. When the fine powder generation rate satisfies the above range, high-temperature cycle life and resistance characteristics can be improved.

### Positive Electrode

In another embodiment, a positive electrode is provided, the positive electrode comprising a current collector, and a positive electrode active material layer located on one surface of the current collector and including the positive electrode active material manufactured according to the foregoing embodiment. The characteristics of the positive electrode active material included in the positive electrode active material layer are the same as those described above, and therefore a detailed description thereof will be omitted.

The current collector may be, for example, stainless steel, aluminum, nickel, titanium, calcined carbon, or a material in which carbon, nickel, titanium, silver, or the like is coated on the surface of aluminum or stainless steel.

Meanwhile, the positive electrode active material layer may include a binder and a conductive agent.

The binder serves to improve adhesion between the positive electrode active material particles and adhesion between the positive electrode active material and the positive electrode current collector. Examples of the binder include, but are not limited to, polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer (EPDM) rubber, sulfonated EPDM, styrene-butadiene rubber (SBR), fluororubber, or various copolymers thereof. The binder may be included in an amount of from 1 wt% to 30 wt% based on the total weight of the positive electrode active material layer.

The conductive agent is used to impart electronic conductivity to the electrode, and any material that exhibits electronic conductivity without causing chemical changes in the battery may be employed without limitation. Specific examples include graphite such as natural graphite or artificial graphite; carbon-based materials such as carbon black, acetylene black, Ketjen black, channel black, furnace black, lamp black, thermal black, or carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives. One or a combination of two or more thereof may be used. The conductive agent may typically be included in an amount of from 1 wt% to 30 wt% based on the total weight of the positive electrode active material layer.

Except for the use of the above-described positive electrode active material, the positive electrode may be manufactured according to conventional positive electrode manufacturing methods.

Specifically, the positive electrode may be manufactured by applying, onto the positive electrode current collector, a positive electrode active material layer-forming composition including the above-described positive electrode active material and, as needed, optionally including a binder, a conductive agent, or a solvent, followed by drying and rolling. The types and amounts of the positive electrode active material, binder, and conductive agent may be the same as those described above.

The solvent may be any solvent commonly used in the relevant technical field, such as dimethyl sulfoxide (DMSO), isopropyl alcohol, N-methyl-2-pyrrolidone (NMP), acetone, or water, and one or a combination of two or more thereof may be used. The amount of the solvent may simply be sufficient to dissolve or disperse the positive electrode active material, conductive agent, and binder to obtain a viscosity suitable for achieving good coating thickness uniformity during electrode fabrication, considering the slurry coating thickness and manufacturing yield.

Alternatively, the positive electrode may be manufactured by casting the positive electrode active material layer-forming composition onto a separate support, peeling the resulting film from the support, and laminating the peeled film onto the positive electrode current collector.

### Lithium Secondary Battery

In another embodiment, a lithium secondary battery is provided, the lithium secondary battery comprising the positive electrode including the above-described positive electrode active material. Specifically, the lithium secondary battery may include a positive electrode, a negative electrode disposed to face the positive electrode, a separator interposed between the positive electrode and the negative electrode, and an electrolyte, wherein the positive electrode is as described above. In addition, the lithium secondary battery may further optionally include a battery case accommodating an electrode assembly including the positive electrode, the negative electrode, and the separator, and a sealing member for sealing the battery case.

In the lithium secondary battery, the negative electrode may include a negative electrode current collector and a negative electrode active material layer located on the negative electrode current collector.

The negative electrode current collector is not particularly limited so long as it has high conductivity and does not cause chemical changes in the battery. Examples include copper, stainless steel, aluminum, nickel, titanium, calcined carbon, copper or stainless steel whose surfaces are coated with carbon, nickel, titanium, or silver, and aluminum-cadmium alloys. The negative electrode current collector may typically have a thickness of 3 to 500 µm, and similar to the positive electrode current collector, the surface of the negative electrode current collector may be provided with fine irregularities to enhance adhesion of the negative electrode active material. Examples include films, sheets, foils, nets, porous bodies, foams, and nonwoven fabrics.

The negative electrode active material layer may include a negative electrode active material and may optionally include a binder and a conductive agent. For example, the negative electrode active material layer may be formed by applying and drying a negative electrode active material layer-forming composition including the negative electrode active material and optionally including a binder and a conductive agent onto the negative electrode current collector, or by casting the negative electrode active material layer-forming composition onto a separate support, peeling a resulting film from the support, and laminating the film onto the negative electrode current collector.

The negative electrode active material may be any compound capable of reversibly intercalating and deintercalating lithium. Examples include carbonaceous materials such as artificial graphite, natural graphite, graphitized carbon fibers, and amorphous carbon; metal-based compounds capable of forming alloys with lithium such as Si, Al, Sn, Pb, Zn, Bi, In, Mg, Ga, Cd, silicon alloys, tin alloys, or aluminum alloys; metal oxides capable of doping and dedoping lithium such as SiOβ (0 < β < 2), SnO₂, vanadium oxides, and lithium vanadium oxides; or composites including metal-based compounds and carbon-based materials such as Si-C composites or Sn-C composites. Among these, one or a mixture of two or more may be used. A metallic lithium thin film may also be used as the negative electrode active material. Both low-crystalline and high-crystalline carbon materials may be used. Low-crystalline carbon includes soft carbon and hard carbon, and high-crystalline carbon includes amorphous, flaky, platy, spherical, or fibrous natural or artificial graphite, Kish graphite, pyrolytic carbon, mesophase pitch-based carbon fibers, meso-carbon microbeads, mesophase pitches, and pitch-derived cokes such as petroleum or coal-tar pitch cokes.

The binder and conductive agent may be the same as those described above for the positive electrode.

Next, depending on the type of lithium secondary battery, a separator may be disposed between the positive electrode and the negative electrode. Examples of such separators include polyethylene, polypropylene, polyvinylidene fluoride, or multilayer films comprising two or more layers of these materials. Specific examples include polyethylene/polypropylene two-layer separators, polyethylene/polypropylene/polyethylene three-layer separators, polypropylene/polyethylene/polypropylene three-layer separators, and other mixed multilayer membranes.

In addition, in the lithium secondary battery, the electrolyte may include an organic liquid electrolyte, an inorganic liquid electrolyte, a solid polymer electrolyte, a gel polymer electrolyte, a solid inorganic electrolyte, or a molten inorganic electrolyte that may be used in the manufacture of lithium secondary batteries, but is not limited thereto.

Specifically, the organic liquid electrolyte may include an organic solvent and a lithium salt.

The organic solvent may be any solvent capable of serving as a medium through which ions participating in electrochemical reactions of the battery may move. Examples include ester solvents such as methyl acetate, ethyl acetate, γ-butyrolactone, and ε-caprolactone; ether solvents such as dibutyl ether and tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol solvents such as ethyl alcohol and isopropyl alcohol; nitriles such as R-CN (where R is a C₂-C₂₀ linear, branched, or cyclic hydrocarbon group and may include a double bond, an aromatic ring, or an ether bond); amides such as dimethylformamide; dioxolanes such as 1,3-dioxolane; and sulfolane and sulfolane-based solvents. Among these, carbonate-based solvents are preferred. Particularly preferred are mixtures of cyclic carbonates (e.g., ethylene carbonate or propylene carbonate), which exhibit high ion conductivity and dielectric constant and improve charge-discharge performance, and linear carbonates (e.g., EMC, DMC, or DEC), which have low viscosity. The volumetric mixing ratio of cyclic carbonate to linear carbonate may be from about 1:1 to about 1:9 to achieve excellent electrolyte performance.

The lithium salt may be any compound capable of supplying lithium ions in a lithium secondary battery without particular limitation. Examples include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂. The concentration of the lithium salt is preferably from 0.1 M to 2.0 M. When the concentration is within this range, the electrolyte exhibits appropriate conductivity and viscosity, thereby enabling excellent electrolyte performance and effective lithium-ion transport.

As described above, the lithium secondary battery including the positive electrode active material according to the present invention exhibits excellent discharge capacity, output characteristics, and capacity retention, and thus is useful for portable devices such as mobile phones, laptop computers, and digital cameras, as well as hybrid electric vehicle (HEV) and other electric vehicle applications.

### [BEST MODE FOR CARRYING OUT THE INVENTION]

Hereinafter, exemplary embodiments of the present invention will be described in detail. These embodiments are presented by way of example only and are not intended to limit the scope of the invention, which is defined solely by the claims that follow.

### Example 1

### (1) Preparation of Positive Electrode Active Material

A precursor having a composition of Ni_{0.90}Co_{0.03}Mn_{0.07}(OH)₂ was prepared. The precursor was uniformly mixed with LiOH·H₂O (Samjeon Chemical, battery grade) as a lithium raw material and Y₂O₃, ZrO₂, and Al(OH)₃ as doping raw materials to prepare a mixture. At this time, the molar ratio (Li/Me) of lithium (Li) relative to the total metal (Me) excluding lithium was designed to be 1.05, and the doping raw materials were added such that the contents, based on the total weight of the precursor, were 2000 ppm of Zr, 1200 ppm of Y, and 1000 ppm of Al. The mixture was introduced into a calcination furnace under an oxygen atmosphere and subjected to a preliminary calcination at 680°C for 6.5 hours to obtain a preliminarily calcined product.

Thereafter, the preliminarily calcined product was introduced into a calcination furnace under an oxygen atmosphere, heated, and subjected to calcination at 890°C for 3 hours (1st step), then at 940°C for 1 hour (2nd step), and then at 780°C for 11 hours (3rd step) in a three-step calcination process to obtain a calcined product.

The calcined product was pulverized to obtain a single-particle-type metal oxide doped with Al, Y, and Zr.

The obtained single-particle-type metal oxide was dry-mixed with Co(OH)₂ and Al(OH)₃ as coating raw materials, and the mixture was heat-treated at 700°C for 5 hours under an oxygen atmosphere to form a coating layer, thereby preparing the positive electrode active material. At this time, Co(OH)₂ and Al(OH)₃ were mixed in amounts corresponding to 2.5 mol% Co and 1000 ppm Al, based on the weight of the single-particle-type metal oxide.

### Comparative Example 1

Except that the calcination process was performed by preliminarily calcining at 680°C for 6.5 hours and subsequently heating and calcining the preliminarily calcined product at 890°C for 4 hours (1st step) and then at 780°C for 11 hours (2nd step) under an oxygen atmosphere, the single-particle-type positive electrode active material was prepared in the same manner as in Example 1.

### Experimental Example 1 - Measurement of Particle Breakage

The degree of particle breakage was measured for the positive electrodes prepared according to Example 1 and Comparative Example 1, and the results are shown in Table 1 below. Specifically, 10 g of the positive electrode active material was mixed with 3.5 g of NMP and cast onto an aluminum foil (Al foil) having a thickness of 20 µm (70 mm × 210 mm), followed by drying in a convection oven at 120°C for 30 minutes. Thereafter, an aluminum foil of the same size was placed over the active material-coated foil to prepare a sample. The sample was pressed 5 times using a roll press at a press gauge of 0.01 mm, and 2 g of the active material particles were collected. The collected particles were analyzed for particle-size distribution using a Malvern MS3000 analyzer, and the degree of fine powder generation was evaluated. The degree of particle breakage was represented by the sum of the volume percent (Vol%) of fines having a particle size of less than 1 µm in the particle-size distribution results.

**[Table 1]**

| Sample | Particle Breakage |
|---|---|
| Example 1 | 1.85 vol% |
| Comparative Example 1 | 2.28 vol% |

Referring to Table 1, it can be seen that the fine-powder generation rate of the positive electrode active material of Example 1, which was prepared using the three-step (3-STEP) calcination process, is significantly lower than that of Comparative Example 1, in which a two-step (2-STEP) calcination process was employed.

### Experimental Example 2 - Measurement of Residual Lithium

For the positive electrode active materials prepared according to Example 1 and Comparative Example 1, the amount of residual lithium was measured using a T50 model manufactured by METTLER TOLEDO. The results are shown in Table 2 below.

**[Table 2]**

| Sample | Total-Li |
|---|---|
| Example 1 | 0.7194 |
| Comparative Example 1 | 0.8781 |

Referring to Table 2, it can be seen that the residual lithium content of the positive electrode active material prepared according to Example 1 is lower than that of the positive electrode active material prepared according to Comparative Example 1.

### Experimental Example 3 - Measurement of Crystallite Size

For the positive electrode active materials prepared according to Example 1 and Comparative Example 1, the crystallite size and the values of the c-axis and a-axis were measured as described below. The results are shown in Table 3.
1. Structural analysis of each sample was performed using a SmartLab instrument manufactured by Rigaku.
2. The configuration of the SmartLab instrument was as follows:
- Goniometer radius: 300.0 mm
- Rotating anode X-ray tube (DPTA-II)
- Theta_s arm: BB slit
- CBO cross-beam optics for Cu target)
- Soller slit: 5.0°
- 10-mm incident slit
- Theta_d arm: 8.0-mm receiving slit
- Diffracted beam monochromator (DBM) unit for D/teX Ultra, D/teX Ultra detector
- Sample stage: ASC-6 (auto sample changer), reflection knife edge

3. X-rays were generated by applying 45 kV and 200 mA (9 kW) to the Cu anode.
4. The instrument optics were set to a 1/2-degree incident slit and an 8.0-mm receiving slit. XRD measurements were conducted in the range of 10-80°, with a step size of 0.02° and a scan rate of 10°/min.
5. The crystallite size was calculated using the SmartLab Studio II x64 v4.2.82.0 software provided by Rigaku.
6. The calculations were performed using the WPPF (Whole Powder Pattern Fitting) method within the software.

**[Table 3]**

| Sample | Crystal size |
|---|---|
| Example 1 | 195 nm |
| Comparative Example 1 | 181 nm |

Referring to Table 3, it can be seen that the crystallite size of the positive electrode active material prepared according to Example 1 is 190 nm or greater, whereas the crystallite size of the positive electrode active material prepared according to Comparative Example 1 is less than 190 nm.

### Experimental Example 4 - Measurement of Particle Size Distribution

For the positive electrode active materials prepared according to Example 1 and Comparative Example 1, the Span value and Dn10 value were measured. Specifically, particle size analysis was performed using an S3500 instrument manufactured by Microtrac.
- Sample amount: 0.02 g
- Dispersant: 10 wt% (NaPO₃)₆, 0.5 g
- Deionized water: 5 g
- External ultrasonication: 1 min

### Measurement Conditions

### (A) SDC (Sample Delivery Controller)

- SDC Control Parameters
   - Number of rinses: 3
   - Deaeration cycles: 1
   - Flow rate: 40

### (B) Analysis Conditions

- Particle Information
   - Particle characteristics: Refractive index = 1.55
- Fluid Information
   - Fluid characteristics: Refractive index = 1.333

### (C) Timing Parameters

- Set-zero time: 10 s
- Measurement run:

- Run time: 10 s
- Number of runs: 3

The results are shown in Table 4.

**[Table 4]**

| Particle distribution | Span | Dn10 |
|---|---|---|
| Example 1 | 0.86 | 1.60 |
| Comparative Example 1 | 0.98 | 1.44 |

Referring to Table 4, Example 1, which was prepared in the same manner as described above, exhibits a Span value of 0.9 or less and a Dn10 value of 1.5 or greater. In contrast, Comparative Example 1 exhibits a Span value exceeding 0.9 and a Dn10 value of less than 1.5. Accordingly, it can be confirmed that the positive electrode active material of Example 1 has superior particle size uniformity and reduced formation of fine particles, demonstrating improved single-crystallinity compared to Comparative Example 1.

It should be understood that the present invention is not limited to the foregoing examples and may be embodied in various other forms. Those skilled in the art will appreciate that various modifications can be made without departing from the spirit or essential characteristics of the present invention. Therefore, the embodiments described above are merely illustrative and should not be construed as limiting in any respect.

## Claims

1. A method for manufacturing a positive electrode active material for a lithium secondary battery, the method comprising:
preparing a metal hydroxide comprising nickel, cobalt, and manganese;
mixing the metal hydroxide, a lithium raw material, and a dopant raw material to prepare a mixture;
preliminarily calcining the mixture to obtain a preliminarily calcined product;
subjecting the preliminarily calcined product to a three-step calcination process including a first calcination, a second calcination, and a third calcination to obtain a calcined product in a single-particle form; and
mixing the calcined product with a coating raw material and heat-treating the mixture to obtain a metal oxide having a coating layer formed thereon,
wherein, in the step of obtaining the calcined product, the second calcination is performed at a temperature higher than that of the first calcination, and the third calcination is performed at a temperature lower than that of the first calcination.

2. The method of claim 1, wherein the first calcination is performed at a temperature of 870°C to 930°C for 2 hours to 6 hours.

3. The method of claim 1, wherein the second calcination is performed at a temperature of 890°C to 960°C for 0.5 hours to 2 hours.

4. The method of claim 1, wherein the third calcination is performed at a temperature of 750°C to 870°C for 5 hours to 14 hours.

5. The method of claim 1, wherein the preliminary calcination is performed at a temperature of 650°C to 770°C for 3 hours to 10 hours.

6. The method of claim 1, wherein, in the step of preparing the mixture, the dopant raw material comprises an aluminum raw material, a yttrium raw material, and a zirconium raw material.

7. The method of claim 6, wherein the aluminum raw material is mixed in an amount of 500 ppm to 1,500 ppm based on the total weight of the metal hydroxide.

8. The method of claim 6, wherein the yttrium raw material is mixed in an amount of 400 ppm to 2,000 ppm based on the total weight of the metal hydroxide.

9. The method of claim 6, wherein the zirconium raw material is mixed in an amount of 1,200 ppm to 2,800 ppm based on the total weight of the metal hydroxide.

10. The method of claim 1, wherein the coating raw material comprises a cobalt coating raw material and an aluminum coating raw material.

11. The method of claim 10, wherein the cobalt coating raw material is mixed in an amount of 1.5 mol% to 3 mol% based on 100 g of the calcined product.

12. The method of claim 10, wherein the aluminum coating raw material is mixed in an amount of 500 ppm to 1,500 ppm based on 100 g of the calcined product.

13. The method of claim 10, wherein the cobalt coating raw material comprises at least one selected from Co(OH)₂, CoO, Co₃O₄, CoCO₃, cobalt acetate, and cobalt oxalate.

14. The method of claim 10, wherein the aluminum coating raw material comprises at least one selected from Al(OH)₃, Al₂(SO₄)₃, Al(NO₃)₃, Al₂O₃, and AlCl₃.

15. The method of claim 1, wherein the heat treatment for obtaining the metal oxide having the coating layer formed thereon is performed at 660°C to 760°C for 3 hours to 8 hours.

16. The method of claim 1, wherein the metal oxide having the coating layer formed thereon is represented by the following Chemical Formula 1: 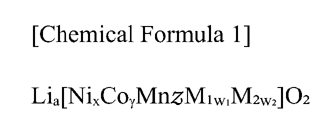
where 0.8 ≤ a ≤ 1.2, 0.8 ≤ x ≤ 0.99, 0 < y ≤ 0.06, 0 < z ≤ 0.14, 0 < w₁ ≤ 0.05, 0 ≤ w₂ < 0.05, and x + y + z + w₁ + w₂ = 1,
wherein M₁ comprises Al, Y, and Zr, and M₂ comprises one or more selected from B, Al, Mg, Ti, Nb, W, Sc, Si, V, Fe, Y, Mo, Ce, Hf, Ta, La, and Sr.

17. The method of claim 1, wherein, when the positive electrode active material is subjected to five pressings using a roll press at a press gauge of 0.01 mm, the total amount of fines having a particle diameter of less than 1 µm is 2 vol% or less.

18. A positive electrode for a lithium secondary battery comprising the positive electrode active material manufactured according to any one of claims 1 to 17.

19. A lithium secondary battery comprising the positive electrode of claim 18.
